# FASCICULE DE BREVET EUROPEEN

(11) **EP 0 759 866 B1**
(45) Date de publication et mention de la délivrance du brevet: **07.01.1998**
(21) Numéro de dépôt: 95916742.0
(22) Date de dépôt: 12.04.1995
(51) Int. Cl.: B60T 17/18, B60R 21/09

(54) **MAITRE-CYLINDRE A SECURITE ACCRUE**
HAUPTZYLINDER MIT ERHÖHTER SICHERHEIT
IMPROVED SAFETY MASTER CYLINDER

(30) Priorité: 20.05.1994 FR 9406142
(43) Date de publication de la demande: 05.03.1997
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR); PEREZ, Revilla, Miguel, F-95100 Argenteuil (FR); COBIANCHI, Flavio, 126, rue de Stalingrad F-93700 Drancy (FR)
(74) Mandataire: Bentz, Jean-Paul
(86) Numéro de dépôt international: FR9500467
(87) Numéro de publication internationale: WO9532115

(56) Documents cités:
- DE-A- 3 741 881
- DE-U- 9 307 274
- GB-A- 2 230 493
- US-A- 5 051 063

## Description

La présente invention concerne un dispositif de freinage comprenant un maître-cylindre et une canalisation, le maître-cylindre comprenant un corps percé d'un alésage fermé d'un côté par un fond et de l'autre par un piston qui coulisse dans cet alésage en y délimitant une chambre de pression qui est reliée à au moins un moteur de frein à travers une sortie de cette chambre et à travers la dite canalisation de pression, la chambre et la canalisation de pression délimitant ensemble un volume de travail rempli d'un fluide hydraulique.

En pratique, tous les dispositifs de freinage utilisés dans les systèmes de freinage hydrauliques des véhicules à moteur depuis l'invention de ces derniers répondent à cette définition.

L'accroissement des normes de sécurité a révélé l'utilité de faire évoluer les maîtres-cylindres d'une façon telle qu'un choc frontal appliqué au véhicule ne puisse être facilement transmis à la jambe du conducteur par le maître-cylindre, même lorsque le choc intervient alors que le conducteur appuie de tout son poids sur la pédale de frein.

Les recherches dans ce domaine sont par exemple attestées par le document GB-A-2 230 493.

La présente invention se situe dans ce contexte, et a pour but de proposer un dispositif de freinage répondant à cette exigence.

A cette fin, le dispositif de freinage de la présente invention est essentiellement caractérisé en ce que le volume de travail est partiellement délimité par un dispositif de fuite autorisant sélectivement, en réponse à un choc qui lui est appliqué, une fuite du fluide hydraulique vers l'extérieur de ce volume de travail.

Selon un premier mode de réalisation possible, le dispositif de fuite comprend essentiellement une valve comportant une pièce d'obturation commandée par un poussoir faisant saillie à l'extérieur du volume de travail, cette valve étant propre à ouvrir le volume de travail vers l'extérieur en réponse à une translation effectuée par le poussoir sous l'effet d'un choc.

Dans ce cas, la valve présente par exemple une paroi percée d'un orifice qui la réduit à une surface annulaire entourant cet orifice, et la pièce d'obturation présente un épaulement qui coopère avec cette surface annulaire, le long d'une courbe fermée entourant l'orifice et par l'intermédiaire d'un joint annulaire, pour obturer la paroi de façon étanche lorsque cette pièce d'obturation se trouve dans une position de repos.

La valve peut comprendre un corps cylindrique externe au maître-cylindre, obturé par la pièce d'obturation, et dans lequel celle-ci est montée à translation, ou la paroi de la valve peut être constituée par le fond du maître-cylindre, cette valve étant alors logée dans le maître-cylindre et faisant partie intégrante de ce dernier.

Dans tous les cas, il est préférable que la pièce d'obturation soit sollicitée par un ressort dans une position de repos.

Dans un autre mode de réalisation possible, le dispositif de fuite comprend un corps creux fragile, externe au maître-cylindre, et propre à se rompre sous l'effet d'un choc.

D'autres caractéristiques et avantages de l'invention ressortiront clairement de la description qui en est faite ci-après, à titre indicatif et nullement limitatif, en référence aux figures annexées, parmi lesquelles :
- la Figure 1 est une vue en coupe partielle d'un système de freinage incorporant un maître-cylindre conforme à un premier mode de réalisation de l'invention;
- la Figure 2 est une vue en coupe partielle d'un tel maître-cylindre.
- la Figure 3 est une vue en coupe partielle d'un maître-cylindre conforme à une variante du premier mode de réalisation de l'invention;
- la Figure 4 est une vue en coupe partielle d'un maître-cylindre conforme à une seconde variante du premier mode de réalisation de l'invention;
- la Figure 5 est une vue en coupe partielle d'un maître-cylindre conforme à un second mode de réalisation de l'invention; et
- la Figure 6 est une vue en coupe partielle d'un maître-cylindre conforme à une variante du second mode de réalisation de l'invention.

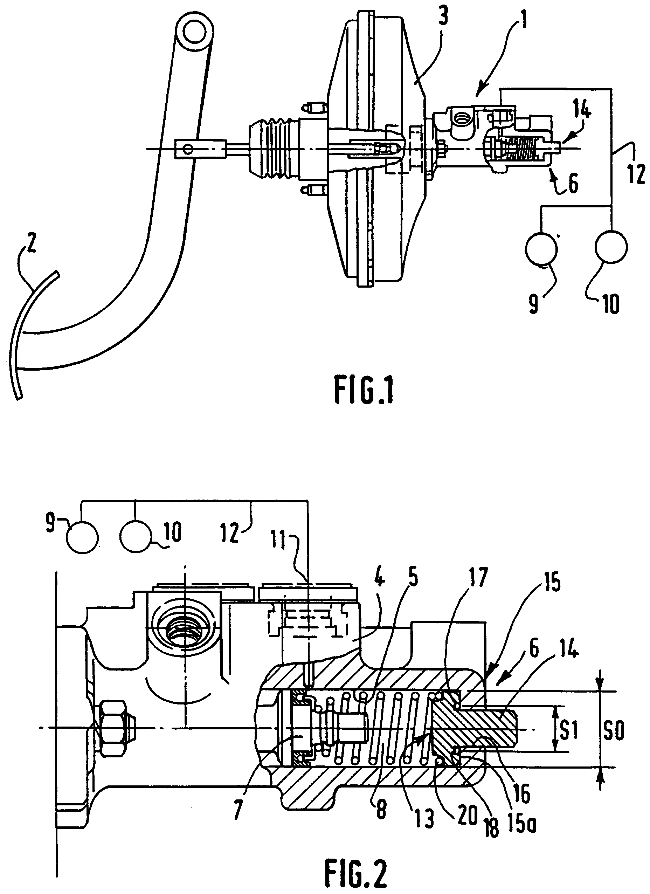

Comme le montre la figure 1, un système hydraulique de freinage comprend traditionnellement un maître-cylindre 1 actionné par une pédale 2, le plus souvent à travers un servomoteur d'assistance 3 qui amplifie la force exercée sur la pédale 2.

Le maître-cylindre 1 comprend lui-même (figure 2) un corps 4 percé d'un alésage 5 fermé d'un côté par un fond 6 et de l'autre par un piston 7 qui coulisse dans cet alésage en y délimitant une chambre de pression 8 qui est reliée à au moins un moteur de frein 9, 10 à travers une sortie 11 de cette chambre et à travers une canalisation 12 de pression.

La chambre 8 et la canalisation de pression 12 délimitent ensemble un volume de travail rempli d'un fluide hydraulique qui permet d'actionner chaque moteur de frein 9, 10 relié au maître-cylindre.

Selon l'invention, le volume de travail 8, 12 est partiellement délimité par un dispositif de fuite autorisant sélectivement, en réponse à un choc qui lui est appliqué, une fuite du fluide hydraulique vers l'extérieur de ce volume de travail.

Dans le mode de réalisation des figures 1à 4, ce dispositif de fuite comprend essentiellement une valve comportant une pièce d'obturation13 commandée par un poussoir 14 faisant saillie à l'extérieur du volume de travail, cette valve étant propre à ouvrir le volume de travail vers l'extérieur en réponse à une translation effectuée par le poussoir 14 sous l'effet d'un choc.

Dans le mode de réalisation des figures 1à 3, la valve présente une paroi 15 percée d'un orifice 16 qui la réduit à une surface annulaire entourant cet orifice, et la pièce d'obturation 13 présente un épaulement 17 qui coopère avec cette surface annulaire, le long d'une courbe fermée d'aire S1 entourant l'orifice et par l'intermédiaire d'un joint annulaire 18, pour obturer la paroi 15 de façon étanche lorsque cette pièce d'obturation 13 se trouve dans une position de repos, telle qu'illustrée sur les figures.

La paroi 15 de la valve peut être constituée par le fond du maître-cylindre lui-même, cette valve étant ainsi logée dans le maître-cylindre et faisant partie intégrante de ce dernier, comme le montre le mode de réalisation des figures 1 et 2.

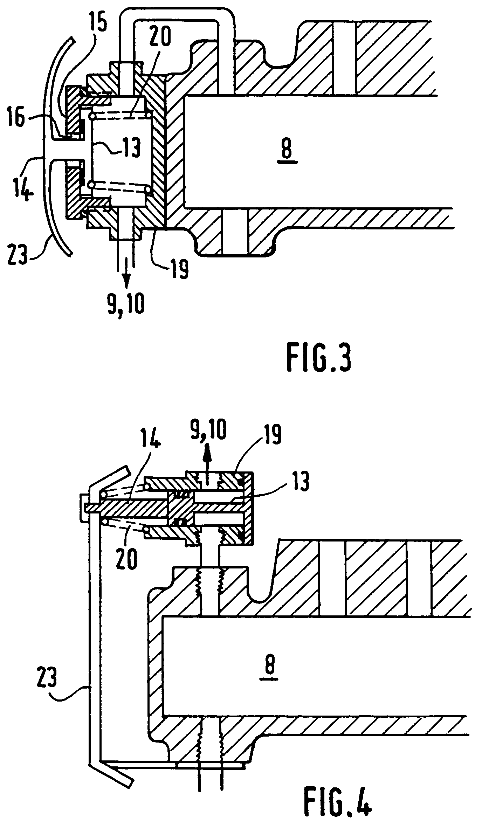

Cependant, la valve peut aussi comprendre un corps cylindrique 19 externe au maître-cylindre, obturé par la pièce d'obturation, et dans lequel celle-ci est montée à translation, comme le montrent les figures 3 et 4.

Dans tous les cas, il est avantageux que la pièce d'obturation soit sollicitée par un ressort 20 dans une position de repos, dans laquelle elle assure sa fonction d'obturation.

Comme le montre la figure 4, la pièce d'obturation 13 peut être conçue pour obturer les deux faces du corps cylindrique 19.

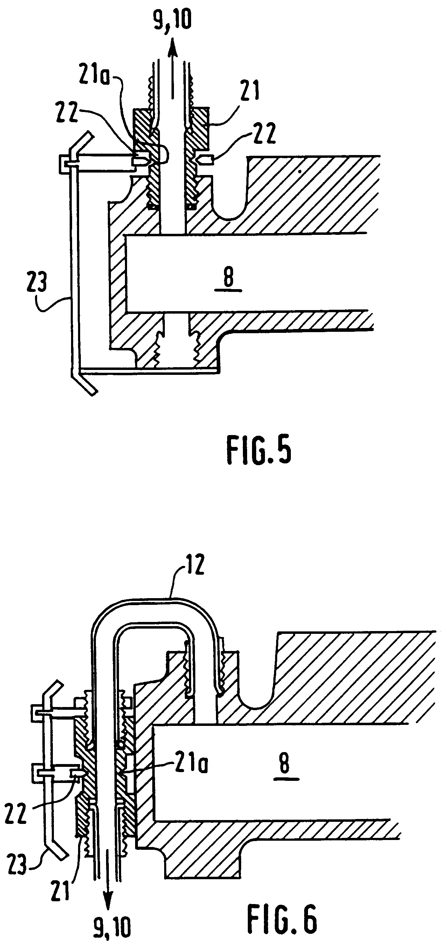

Selon un autre mode de réalisation du dispositif de fuite, représenté aux figures 5 et 6, ce dernier comprend un corps creux fragile 21, externe au maître-cylindre 1, et propre à se rompre sous l'effet d'un choc.

Par exemple, le corps creux 21 peut être réalisé en alliage léger, et présenter des zones de plus faible résistance, telles que 21a, sur lesquelles s'appuient des couteaux 22 exerçant sur le corps creux 21 un effort de cisaillement en cas de choc.

Dans tous les modes de réalisation, il est préférable que la pièce d'obturation 13 dans le cas des figures 3 et 4, ou les couteaux 22 dans le cas des figures 5 et 6 se trouvent commandées en position par des organes de poussée de grande surface, tels que 23, montés à l'avant du maître-cylindre dans le sens de marche du véhicule équipé de l'invention.

Grâce à ces caractéristiques, un choc frontal du véhicule a pour effet d'enfoncer la pièce d'obturation 13 ou de provoquer la rupture du corps creux 21, ce dont il résulte que le liquide de freinage présent dans le volume de travail 8, 12 s'échappe vers l'extérieur.

Dans ces conditions, la pression dans la chambre 8 s'écroule instantanément, de sorte que même si le corps du maître-cylindre se trouve repoussé en direction de la pédale, celle-ci ne renvoie vers le conducteur qu'une force relativement faible dans la mesure où le piston 7 peut librement coulisser dans l'alésage 5.

## Revendications

1. Dispositif de freinage comprenant un maître-cylindre et une canalisation, le maître-cylindre comprenant un corps (4) percé d'un alésage (5) fermé d'un côté par un fond (6) et de l'autre par un piston (7) qui coulisse dans cet alésage en y délimitant une chambre de pression (8) qui est reliée à au moins un moteur de frein à travers une sortie (11) de cette chambre et à travers la dite canalisation de pression (12), la chambre et la canalisation de pression délimitant ensemble un volume de travail rempli d'un fluide hydraulique, caractérisé en ce que ce volume de travail (8, 12) est en outre partiellement délimité par un dispositif de fuite autorisant sélectivement, en réponse à un choc qui lui est appliqué, une fuite du fluide hydraulique vers l'extérieur de ce volume de travail.

2. Dispositif suivant la revendication 1, caractérisé en ce que le dispositif de fuite comprend essentiellement une valve comportant une pièce d'obturation (13) commandée par un poussoir (14) faisant saillie à l'extérieur du volume de travail, cette valve étant propre à ouvrir le volume de travail vers l'extérieur en réponse à une translation effectuée par le poussoir sous l'effet d'un choc.

3. Dispositif suivant la revendication 2, caractérisé en ce que la valve présente une paroi (15) percée d'un orifice (16) qui la réduit à une surface annulaire (15a) entourant cet orifice, et en ce que la pièce d'obturation (13) présente un épaulement (17) qui coopère avec cette surface annulaire (15a), le long d'une courbe fermée entourant l'orifice et par l'intermédiaire d'un joint annulaire (18), pour obturer la paroi de façon étanche lorsque cette pièce d'obturation se trouve dans une position de repos.

4. Dispositif suivant l'une quelconque des revendications 2 et 3, caractérisé en ce que la valve comprend un corps cylindrique (21) externe au maître-cylindre, obturé par la pièce d'obturation (13), et dans lequel celle-ci est montée à translation.

5. Dispositif suivant la revendication 3, caractérisé en ce que la paroi (15) de la valve est constituée par le fond du maître-cylindre, cette valve étant ainsi logée dans le maître-cylindre et faisant partie intégrante de ce dernier.

6. Dispositif suivant l'une quelconque des revendications 2 à 5, caractérisé en ce que la pièce d'obturation est sollicitée par un ressort (20) dans une position de repos.

7. Dispositif suivant la revendication 1, caractérisé en ce que le dispositif de fuite comprend un corps creux fragile (19), externe au maître-cylindre, et propre à se rompre sous l'effet d'un choc.

## Claims

1. Braking device comprising a master cylinder and a pressure pipe, the master cylinder comprising a body (4) pierced with a bore (5) closed on one side by an end (6) and on the other by a piston (7) which slides in this bore therein delimiting a pressure chamber (8) which is connected through at least one brake motor through an outlet (11) of this chamber and through said pressure pipe (12), the chamber and the pressure pipe together delimiting a working volume filled with a hydraulic fluid, characterized in that this working volume (8, 12) is furthermore partially delimited by a leak-off device which, in response to an impact which is applied to it, selectively allows hydraulic fluid to leak off towards the outside of this working volume.

2. Device according to Claim 1, characterized in that the leak-off device essentially comprises a valve including a closure piece (13) controlled by a push rod (14) projecting out of the working volume, this valve being capable of opening the working volume to the outside in response to a translational movement carried out by the push rod under the effect of an impact.

3. Device according to Claim 2, characterized in that the valve exhibits a wall (15) pierced with an orifice (16) which reduces it to an annular surface (15a) surrounding this orifice, and in that the closure piece (13) exhibits a shoulder (17) which interacts with this annular surface (15a) along a closed curve surrounding the orifice and by means of an annular seal (18) in order to close off the wall in a sealed fashion when this closure piece is in a position of rest.

4. Device according to either one of Claims 2 and 3, characterized in that the valve comprises a cylindrical body (21) outside the master cylinder, closed off by the closure piece (13), and in which the latter is translationally mounted.

5. Device according to Claim 3, characterized in that the wall (15) of the valve is made up of the end of the master cylinder, this valve thus being housed in the master cylinder and forming an integral part of the latter.

6. Device according to any one of Claims 2 to 5, characterized in that the closure piece is urged into a position of rest by a spring (20).

7. Device according to Claim 1, characterized in that the leak-off device comprises a fragile hollow body (19) outside the master cylinder and capable of breaking under the effect of an impact.

## Patentansprüche

1. Bremsvorrichtung mit einem Hauptzylinder und einer Leitung, wobei der Hauptzylinder einen Körper (4) aufweist, der von einer Bohrung (5) durchbrochen ist, die auf einer Seite durch einen Boden (6) und auf der anderen Seite durch einen Kolben (7) verschlossen ist, der in dieser Bohrung gleitet und dort eine Druckkammer (8) abgrenzt, die über einen Ausgang (11) dieser Kammer und über die Druckleitung (12) mit wenigstens einer Bremsbetätigungsvorrichtung verbunden ist, wobei die Kammer und die Druckleitung zusammen ein Arbeitsvolumen abgrenzen, das mit einem Hydraulikfluid gefüllt ist, dadurch gekennzeichnet, daß dieses Arbeitsvolumen (8, 12) außerdem teilweise durch eine Austrittsvorrichtung abgegrenzt ist, die selektiv in Abhängigkeit von einem auf sie ausgeübten Stoß ein Austreten von Hydraulikfluid aus dem Arbeitsvolumen heraus ermöglicht.

2. Vorrichtung nach Anspruch 1, dadurch gekennzeichnet, daß die Austrittsvorrichtung im wesentlichen ein Ventil enthält, das ein Verschlußteil (13) aufweist, das von einem Stößel (14) gesteuert wird, der aus dem Arbeitsvolumen herausragt, wobei das Ventil in der Lage ist, das Arbeitvolumen in Abhängigkeit von einer Translation, die von dem Stößel unter der Wirkung eines Stoßes ausgeführt wird, nach außen zu öffnen.

3. Vorrichtung nach Anspruch 2, dadurch gekennzeichnet, daß das Ventil eine Wand (15) aufweist, die von einer Öffnung (16) durchbrochen ist, welche sie auf eine ringförmige Fläche (15a) reduziert, die diese Öffnung umgibt, und daß das Verschlußteil (13) einen Absatz (17) aufweist, der mit dieser ringförmigen Fläche (15a) entlang einer die Öffnung umschließenden, geschlossenen Kurve mittels einer ringförmigen Dichtung (18) zusammenwirkt, um die Wand in dichter Weise zu verschließen, wenn sich das Verschlußteil in einer Ruhestellung befindet.

4. Vorrichtung nach einem der Ansprüche 2 und 3, dadurch gekennzeichnet, daß das Ventil einen zylindrischen Körper (21) außerhalb des Hauptzylinders aufweist, der von dem Verschlußteil (13) verschlossen ist und in welchem dieses translationsverschiebbar angebracht ist.

5. Vorrichtung nach Anspruch 3, dadurch gekennzeichnet, daß die Wand (15) des Ventils durch den Boden des Hauptzylinders gebildet ist, so daß das Ventil in dem Hauptzylinder aufgenommen ist und einen integralen Teil von diesem bildet.

6. Vorrichtung nach einem der Ansprüche 2 bis 5, dadurch gekennzeichnet, daß das Verschlußteil mittels einer Feder (20) in eine Ruhestellung beaufschlagt wird.

7. Vorrichtung nach Anspruch 1, dadurch gekennzeichnet, daß die Austrittsvorrichtung einen zerbrechlichen hohlen Körper (19) außerhalb des Hauptzylinders aufweist, der unter der Einwirkung eines Stoßes zerbrechen kann.
